# EUROPÄISCHE PATENTSCHRIFT

(11) **EP 1 352 439 B1**
(45) Veröffentlichungstag und Bekanntmachung des Hinweises auf die Patenterteilung: **25.08.2004**
(21) Anmeldenummer: 01995559.0
(22) Anmeldetag: 01.12.2001
(51) Int. Cl.: H01M 8/04, H01M 8/24

(54) **PEM-BRENNSTOFFZELLENSTAPEL MIT KÜHLMEDIUMVERTEILERSTRUKTUR**
PEM-FUEL CELL STACK WITH A COOLANT DISTRIBUTOR STRUCTURE
EMPILEMENT DE PILES A COMBUSTIBLE PEM A STRUCTURE DE REPARTITION DE FLUIDE REFRIGERANT

(30) Priorität: 12.12.2000 DE 10061784
(43) Veröffentlichungstag der Anmeldung: 15.10.2003
(73) Patentinhaber: DaimlerChrysler AG, 70567 Stuttgart (DE)
(72) Erfinder: BLANK, Felix, 78464 Konstanz (DE); HELLER, Cosmas, 88045 Friedrichshafen (DE)
(86) Internationale Anmeldenummer: PCT/DE2001/004518
(87) Internationale Veröffentlichungsnummer: WO 2002/049134

(56) Entgegenhaltungen:
- DE-C- 19 600 200
- US-A- 5 541 015
- US-A- 5 773 160
- US-A- 5 922 485
- PATENT ABSTRACTS OF JAPAN vol. 1997, no. 05, 30. Mai 1997 (1997-05-30) & JP 09 022709 A (MITSUBISHI HEAVY IND LTD), 21. Januar 1997 (1997-01-21)

## Beschreibung

Die Erfindung betrifft einen elektrochemischen Brennstoffzellenstapel nach dem Oberbegriff des Patentanspruchs 1.

Brennstoffzellenstapel gemäß dem Stand der Technik umfassen mindestens eine, üblicherweise jedoch eine Mehrzahl einzelner Brennstoffzellen, die neben oder übereinander gestapelt sind. Eine einzelne Zelle umfasst zwei Verteilerplatten zur Verteilung der Fluide und einer dazwischen angeordneten Membran-Elektroden-Einheit, auch abgekürzt als MEA bezeichnet. Eine MEA umfasst dabei eine Anode, eine Kathode und eine dazwischen angeordnete, protonenleitende Elektrolytmembran. Mittels der protonenleitenden Elektrolytmembran (PEM) wird ein Protonentransport von der Anode zur Kathode gewährleistet. Die Verteilerplatten weisen anoden- und kathodenseitig Gaskanäle (Anoden- und Kathodenkanäle) zur Zu- und Abführung des brennstoffhaltigen Anodengases, z.B. Wasserstoff, und des sauerstoffhaltigen Kathodengases, z.B. Luft auf.
Zur Temperierung der Brennstoffzelle sind innerhalb des Stapels Kühlkammern vorhanden, die von einem flüssigen oder gasförmigen Kühlmedium durchströmt werden. Diese können an beliebigen Stellen innerhalb des Stapels und innerhalb einer Einzelzelle angeordnet sein. Zum Beispiel kann jeder Einzelzelle eine Kühlkammer zugeordnet sein. Es ist aber auch möglich, dass mehrere Einzelzellen einer Kühlkammer zugeordnet sind.

An der Kathode entsteht in einer elektrochemischen Reaktion Produktwasser. Die MEA unterliegt allerdings insbesondere am Eintritt des Kathodengases in den Kathodenkanal einem starken Feuchtigkeitsentzug. Dieser Feuchtigkeitsentzug wird durch die Wasserverdampfung aufgrund der hohen Temperaturen, die in der elektrochemischen Reaktion und beim Stromtransport entstehen verursacht. Durch den elektroosmotischen Transport von Wasserstoff-Wasser-Verbindungen, z.B. Hydronium Ionen H(H2O)+, die Wasser von der Anode zur Kathode transportieren, wird dieser Effekt verstärkt. Ein Austrocknen der MEA führt zu einer Absenkung der Protonenleitfähigkeit und damit zu einer Verringerung der Zellspannung und des Wirkungsgrads der Brennstoffzelle.

Zur Regulierung der Feuchtigkeit des Kathodengases wird in US 4,973,530 ein Brennstoffzellenstapel vorgeschlagen, der zur Regulierung der Feuchtigkeit des Kathodengases ein weiteres Medium, z.B. Wasser, und somit einen weiteren separaten Fluidkreislauf aufweist. Die Verteilerplatten benachbarter Brennstoffzellen weisen hierbei zwei aneinandergrenzende und in Strömungsverbindung stehende Kanalbereiche auf. Im ersten Kanalbereich wird das Kathodengas an die MEA geleitet. Nach Durchströmen des ersten Kanalbereichs strömt das Kathodengas in den zweiten Kanalbereich und wird dort an eine wasserdurchlässige Membran geleitet. Auf der anderen Seite dieser wasserdurchlässigen Membran wird Wasser entlanggeführt, so dass das Kathodengas in diesem zweiten Kanalbereich befeuchtet werden kann. In einer weiteren Ausführung offenbart US 4,9763,530 auch die gleichzeitige Regulierung der Feuchtigkeit des Anodengases. Somit wird eine nahezu einheitliche Wasserkonzentration im Kathoden- und Anodengas sowie eine nahezu einheitliche Temperatur innerhalb des Brennstoffzellenstapels gewährleistet.
Ein Nachteil ist, dass in dieser Anordnung zur kontinuierlichen Befeuchtung des Kathoden- und Anodengases ein weiterer Fluidkreislauf benötigt wird. Daraus ergeben sich weitere Nachteile hinsichtlich einer kompakten Bauform des Brennstoffzellenstapels. Gegenüber herkömmlichen Brennstoffzellenstapeln weist dieses Konzept auch Nachteile hinsichtlich des reduzierten Wirkungsgrades aufgrund einer verkleinerten Fläche der MEA auf.

Aufgabe der Erfindung ist es, einen Brennstoffzellenstapel zu schaffen, mit dem es möglich ist, ohne zusätzliche Befeuchtung des Kathodengases eine Austrocknung der MEA zu verhindern.

Die Aufgabe wird mit dem Brennstoffzellenstapel gemäß Patentanspruch 1 gelöst. Vorteilhafte Ausführungen der Erfindung sowie ein Verfahren zum Betrieb des erfindungsgemäßen Brennstoffzellenstapels sind Gegenstand von Unteransprüchen.

In dem erfindungsgemäßen Brennstoffzellenstapel überdecken sich zumindest teilweise zum einen der Bereich, in dem das Kühlmedium in den Brennstoffzellenstapel eintritt und der Bereich, in dem das Kathodengas in den Brennstoffzellenstapel eintritt. Außerdem überdecken sich in dem erfindungsgemäßen Brennstoffzellenstapel zum anderen zumindest teilweise der Bereich, in dem Kühlmedium aus dem Brennstoffzellenstapel austritt und der Bereich, in dem das Kathodengas aus dem Brennstoffzellenstapel austritt. Dadurch ergibt sich entlang der Kanäle zur Verteilung des Kühlmediums und des Kathodengases ein Temperaturgradient, mit einer vom Eintrittsbereich zum Austrittsbereich ansteigenden Temperatur. Somit ist es in dem erfindungsgemäßen Brennstoffzellenstapel ohne weitere fertigungstechnische Maßnahmen möglich, eine ausreichende Befeuchtung des Kathodengases zu gewährleisten. Dadurch wird mittels des erfindungsgemäßen Brennstoffzellenstapels eine Austrocknung der MEA vermieden. Insbesondere erfolgt die Befeuchtung des Kathodengases und der MEA mittels des in den Brennstoffzellenreaktionen erzeugten Produktwassers. Weitere Vorteile sind ein verbesserter Wirkungsgrad sowie eine gesteigerte Langzeitstabilität der Brennstoffzelle.

In einer vorteilhaften Ausführungsform der Erfindung ist es möglich, dass sich zusätzlich der Bereich, in dem das Anodengas in den Brennstoffzellenstapel eintritt, mit dem Eintrittsbereich des Kühlmediums und Kathodengases zumindest teilweise überdeckt. Außerdem kann sich zusätzlich der Austrittsbereich des Anodengases zumindest teilweise mit dem Austrittsbereich des Kathodengases und Kühlmediums überdecken.

Selbstverständlich ist es auch möglich, dass sich zusätzlich zwischen dem Eintrittsund dem Austrittsbereich befindliche Bereiche, in denen das Kühlmedium und das Kathodengas strömen, überdecken.

Vorteilhaft wird der erfindungsgemäße Brennstoffzellenstapel mit einem gasförmigen Kühlmedium, vorzugsweise Luft, betrieben, das gegenüber den üblicherweise eingesetzten flüssigen Kühlmedien wie z.B. Wasser oder Glykol eine wesentlich niedrigere Wärmekapazität aufweist. Würde man als Kühlmedium z.B. Wasser verwenden, so würde dies einen großen kühlungstechnischen Aufwand (z.B. große Kühlerfläche) bedeuten, wodurch sich Nachteile hinsichtlich Platzbedarf und Fertigungskosten des Brennstoffzellenstapels ergeben würden. Außerdem kann sich ein Temperaturgradient in einem gasförmigen Kühlmedium mit niedriger Wärmekapazität schneller einstellen als in einem flüssigen Kühlmedium mit großer Wärmekapazität. Es ist somit eine schnellere und feinere Regelung der Temperatur im Brennstoffzellenstapel möglich. Ein weiterer Vorteil eines gasförmigen Kühlmediums ist die gleich große Kühlleistung in jeder einzelnen Brennstoffzelle des Stapels. Dies resultiert daraus, dass auch bei einer hohen Temperaturdifferenz zwischen dem Eintritts- und Austrittsbereich des Kühlmediums ein hoher Volumendurchsatz von gasförmigen Kühlmedium möglich ist. Des weiteren können mit einem gasförmigen Kühlmedium gleich gute oder bessere Zellenspannungen erzielt werden als mit einem flüssigen Kühlmedium.

Das Kühlmedium und das Kathodengas strömen vorteilhaft im Gleichstrom durch den erfindungsgemäßen Brennstoffzellenstapel. Gleichstrom im Bezug auf die Fluidströmung ist hier so zu verstehen, dass die Strömung des Kühlmediums und die Strömung des Kathodengases zumindest eine räumliche Richtungskomponente aufweisen, in der die beiden Fluide im Gleichstrom strömen.

Zum Verständnis der Erfindung sei hier erwähnt, dass der wesentliche Stoffumsatz der Brennstoffzellenreaktionen im Eintrittsbereich des Kathodengases in den Brennstoffzellenstapel stattfindet. Dort wird das Kathodengas auch am stärksten aufgeheizt. In dem erfindungsgemäßen Brennstoffzellenstapel wird aber gerade dieser Bereich, in dem am meisten Wärme erzeugt wird, mittels der erfindungsgemäßen Überdeckungen der Eintrittsbereiche des Kühlmediums und des Kathodengases am stärksten gekühlt.

Das Kühlmedium, das mit niedriger Temperatur, vorzugsweise Umgebungstemperatur (typischerweise 23°C), in den Brennstoffzellenstapel einströmt, wird also entlang des Kühlkanals durch die in den Brennstoffzellenreaktionen entstehende Wärme aufgeheizt. Die Temperatur mit der das Kühlmedium aus dem Brennstoffzellenstapel herausströmt liegt typischerweise bei 65°C.
Das in den Brennstoffzellenstapel einströmende un- oder teilbefeuchtete Kathodengas besitzt einen niedrigen Taupunkt und würde bei hohen Temperaturen (hervorgerufen durch die Brennstoffzellenreaktionen) am Kathodengaseintritt die MEA stark austrocknen. Mittels der erfindungsgemäßen Überdeckungen wird das in den Brennstoffzellenstapel einströmende Kathodengas im Eintrittsbereich aber mittels des Kühlmediums stark gekühlt und auf einem niedrigen Temperatumiveau gehalten. Dadurch wird ein Austrocknen der MEA im Eintrittsbereich des Kathodengases verhindert.

Durch das, in den Brennstoffzellenreaktionen zunehmend entstehende Produktwasser wird der Taupunkt des Kathodengases im weiteren Verlauf des Kathodengaskanals erhöht. Um eine gleichmäßige Befeuchtung des Kathodengases und somit eine gleichmäßige Befeuchtung der MEA entlang des Kathodengaskanals zu gewährleisten, wird die lokale Temperatur des Kühlmediums im Bereich der lokalen Taupunktstemperatur des Kathodengases gewählt. Dies kann z.B. dadurch realisiert werden, dass die Kühlmediumverteilerstruktur zwischen Ein- und Austritt aus dem Brennstoffzellenstapel geeignet geführt wird.
Somit wird eine gleichmäßige Sättigung des Kathodengases erreicht. Dies wird insbesondere mittels der erfindungsgemäßen Überdeckungen der Eintrittsbereiche des Kühlmediums und des Kathodengases und des damit verbundenen Wärmeaustausches zwischen Kühlmedium und Kathodengas erreicht Denn dadurch wird gewährleistet, dass die lokale Temperatur im Kathodengaskanal im Bereich der Taupunktstemperatur des Kathodengases liegt.

Bei Verwendung von MEAs mit einem hohen Wasserrückhaltevermögen, also MEAs die nicht stark zum Austrocknen neigen, kann die lokale Temperatur des Kathodengases und der MEA auch größer als die lokale Taupunktstemperatur sein. Hierbei kann als Kühlmedium auch ein flüssiges Kühlmedium verwendet werden, allerdings sollte in diesem Fall das Temperaturniveau des Kühlmediums höher sein als im Fall eines gasförmigen Kühlmediums.

Es ist aber auch möglich, dass die Taupunktstemperatur des in den Brennstoffzellenstapel eintretenden Anodengases größer ist, als die Eintrittstemperatur des Kühlmediums. Dadurch entsteht gerade in dem kälteren Eintrittsbereich des Anodengaskanals flüssiges Wasser, wodurch die MEA befeuchtet werden kann.

Zur Optimierung des zellinternen Temperaturgradienten entlang des Kathodengaskanals ist ferner eine Anpassung des Wärmeaustausches zwischen dem Kathodengas und dem Kühlmedium an die verschiedenen Betriebszustände der Brennstoffzelle möglich. Diese Anpassung kann durch örtlich beschränkte Maßnahmen im Bereich der Überdeckung von Kühlmediumeintrittsbereich und Kathodengaseintrittsbereich oder der Überdeckung von Kühlmediumaustrittsbereich und Kathodengasaustrittsbereich oder komplementär hierzu im übrigen Bereich der Zelle erfolgen. Diese Maßnahmen können z.B. in einer Anpassung der Geometrie hinsichtlich der Kanäle liegen. Hierbei kann insbesondere der Kanalquerschnitt, Kanalzahl pro Fläche oder die Anordnung der Kanäle räumlich variiert werden. Weitere mögliche Geometrieanpassungen betreffen die Beeinflussung der Kontaktfläche durch Rippen, Stege, Rillen oder Nadeln o.ä. in den Strömungskanälen.

Eine weitere mögliche Maßnahme besteht in dem gezielten räumlichen Einsatz von Materialien mit speziellen Wärmeleiteigenschaften. Zum Beispiel kann im Bereich der starken Kühlung im Eintrittsbereich des Kühlmediums ein Material mit guter Wärmeleitfähigkeit vorhanden sein und/oder im übrigen Bereich der Zelle ein Material mit schlechter Wärmeleitfähigkeit. Die Materialien können sowohl in Schichtform auf die Oberfläche der Kanäle aufgebracht werden, als auch in das Trägermaterial selbst eingebracht werden.

Mit einer oder einer Kombination der genannten Maßnahmen kann beispielsweise im Eintrittsbereich des Kühlmediums für einen hohen Wärmeaustausch zwischen Kathodengas und Kühlmedium und damit für eine stärkere Abkühlung der Brennstoffzelle gesorgt werden. Außerdem kann so die lokale Temperatur des Kathodengases an die lokale Taupunktstemperatur des Kathodengases angepasst werden.

Die Erfindung wird anhand von Ausführungsbeispielen unter Bezugnahme von Zeichnungen näher erläutert. Sie zeigen:
- Fig. 1-3: jeweils Ausführungen des erfindungsgemäßen Brennstoffzellenstapels,
- Fig. 4: den beispielhaften Verlauf der Kühlmediumstemperatur vom Eintritt bis zum Austritt aus einem erfindungsgemäßen Brennstoffzellenstapel,
- Fig. 5: den beispielhaften Verlauf der Taupunktstemperatur entlang des Kathodenkanals eines erfindungsgemäßen Brennstoffzellenstapels,
- Fig. 6: eine Ausführung des erfindungsgemäßen Brennstoffzellenstapels mit lokal angepasster Kanalgeometrie im Eintrittsbereich,
- Fig. 7: eine Ausführung des erfindungsgemäßen Brennstoffzellenstapels mit lokal angepasstem Einsatz wärmeleitender/wärmeisolierender Materialien.

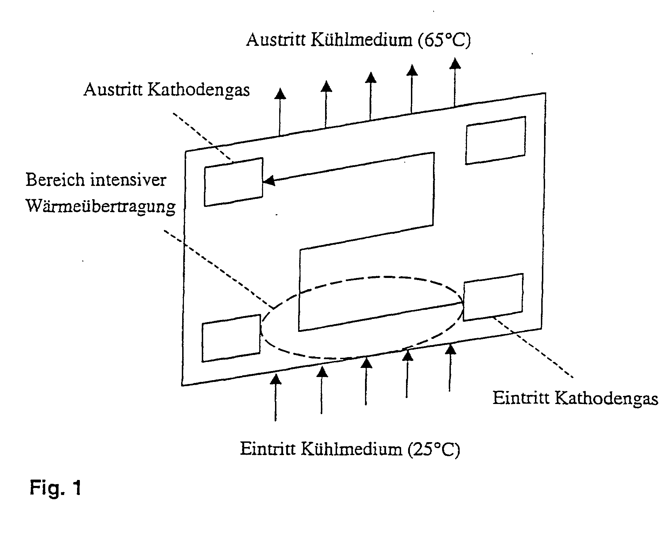

Fig. 1 zeigt eine erste Ausführung des erfindungsgemäßen Brennstoffzellenstapels in schematischer Darstellung. Dargestellt ist eine Platte, z.B. aus Metall, auf deren Oberfläche eine kathodenseitige Gasverteilerstruktur für das Kathodengas eingearbeitet ist. Die Gasverteilerstruktur ist hier nur schematisch eingezeichnet. Sie besteht aus einem oder mehreren serpentinenförmigen oder mäanderförmigen Kanälen, wie sie dem Fachmann an sich bekannt sind. Das Kathodengas tritt über eine Durchbrechung in die Zelle ein, durchläuft den oder die Strömungskanäle und tritt an der diagonal gegenüberliegenden Durchbrechung wieder aus der Zelle aus.
Die Begriffe "Eintrittsbereich" und "Austrittsbereich" eines Fluids im Sinne der vorliegenden Erfindung sind so zu verstehen, dass damit nicht nur der unmittelbare Bereich der Durchbrechungen gemeint ist, sondern zusätzlich deren nähere Umgebung, und zwar gemessen entlang der Fluidströmung. Im dargestellten Beispiel gehört z.B. der Abschnitt des Strömungskanals vom letzten Richtungswechsel bis zur Durchbrechung mit zum Kathodengaseintrittsbereich.

Wie man aus der Zeichnung erkennen kann, tritt das Kühlmedium in dieser Ausführung im wesentlichen über die gesamte Kantenlänge der Platte in die Zelle ein und strömt im Querstrom zu dem Kathodengas (das Kühlmedium strömt auf einer Verteilerstruktur auf der Rückseite der dargestellten Platte). Die resultierende Strömungsrichtung von Kathodengas und Kühlmedium ist in diesem Fall dennoch gleich, weshalb auch hier eine Gleichströrnung von Kathodengas und Kühlmedium vorliegt. Kühlmediumseintrittsbereich und Kathodengaseintrittsbereich überdecken sich in wesentlichen Teilen. Der Bereich der Überdeckung, in dem im wesentlichen der Wärmeübergang zwischen Kathodengas und Kühlmedium stattfindet, ist umrandet. Die dargestellte Umrandung ist lediglich beispielhaft und soll den Bereich des intensivsten Wärmeübergangs anzeigen. Selbstverständlich findet auch in anderen Bereichen (nicht dargestellt) der Überdeckung ein Wärmeübergang statt. Als Kühlmedium wird in dieser Ausführung die Umgebungsluft verwendet.

Ebenfalls eingezeichnet sind typische Temperaturen für Kathodengas und Kühlmedium am Ein- und Austritt. Man erkennt, dass die Temperaturdifferenzen zwischen Ein- und Austritt bei beiden Fluiden - verglichen mit den bekannten Brennstoffzellen - relativ hoch sind. Die Temperaturunterschiede liegen jeweils im Bereich von 30 bis 45°C.

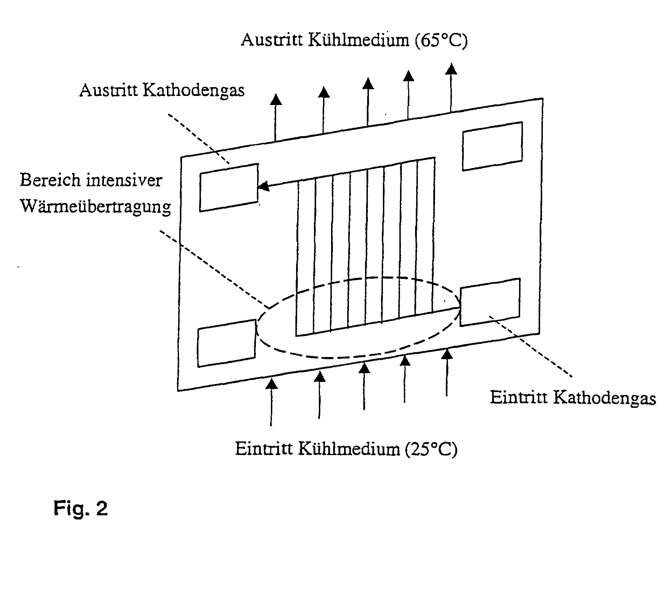

Eine weitere erfindungsgemäße Ausführung zeigt Fig. 2. Er unterscheidet sich von der in Fig. 1 dargestellten Ausführung im wesentlichen nur durch eine andere Gasverteilerstruktur. Diese ist hier als Parallel-Gasverteilerstruktur ausgeführt. Das gasförmige Kühlmedium (z.B. Umgebungsluft) tritt im wesentlichen über die gesamte Kantenlänge der Platte in die Zelle ein und strömt in Gleichrichtung zum Kathodengas (das Kühlmedium strömt auf einer Verteilerstruktur auf der Rückseite der dargestellten Platte). Der Eintrittsbereich des Kühlmediums überdeckt sich mit dem Eintrittsbereich des Kathodengases und der Austrittsbereich des Kühlmediums überdeckt sich mit dem Austrittsbereich des Kathodengases in wesentlichen Teilen.

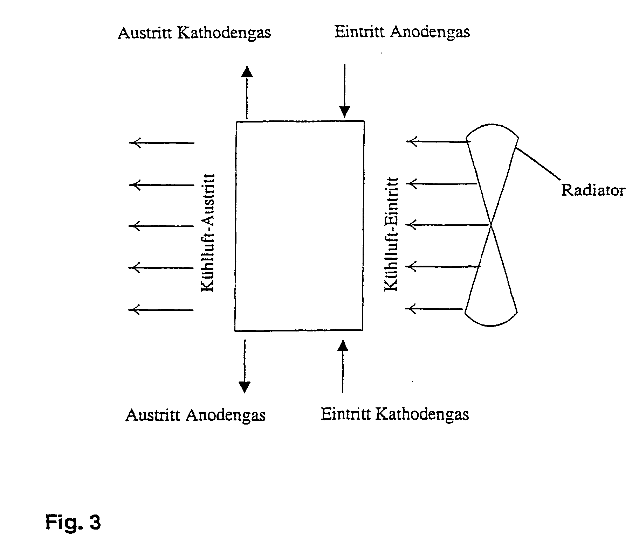

Die Luftkühlung, wie sie bei der Ausführung nach Fig. 1 oder 2 vorgesehen ist, kann vorteilhaft über einen Radiator erfolgen. Fig. 3 zeigt hierzu eine entsprechende Ausführung. Der Radiator ist direkt vor dem Brennstoffzellenstapel angeordnet und bläst die Luft in die Kühlkanäle bzw. Kühlkammern des Brennstoffzellenstapels.
In einer weiteren, hier nicht gezeigten Ausführung, kann die dem Stapel zuzuführende Kühlluft auch über eine Leitung vom Radiator in den Stapel gefördert werden.

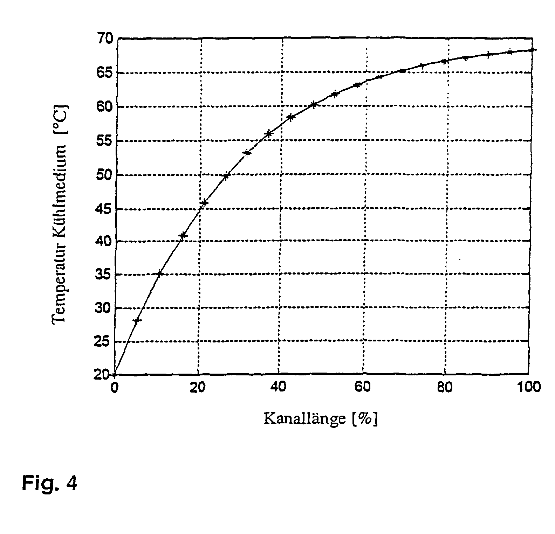

In Fig. 4 ist der beispielhafte Verlauf der Temperatur des Kühlmediums vom Eintritt zum Austritt aus dem erfindungsgemäßen Brennstoffzellenstapel gezeigt. Hierbei ist die Kühlmediumstemperatur über der prozentualen Länge des Kühlkanals zwischen Eintritt und Austritt aus dem Brennstoffzellenstapel dargestellt. Der Verlauf der Temperatur ergibt sich im wesentlichen aus der aufgenommenen Wärme, die in den beschriebenen Brennstoffzellenreaktionen an der MEA erzeugt wird. Mittels Variation der Kühlmediumverteilerstruktur kann der Verlauf der Temperatur verändert werden. Eine weitere Möglichkeit zur Beeinflussung des Temperaturverlaufs des Kühlmediums ist die Veränderung der Wärmekapazität des Kühlmediums.

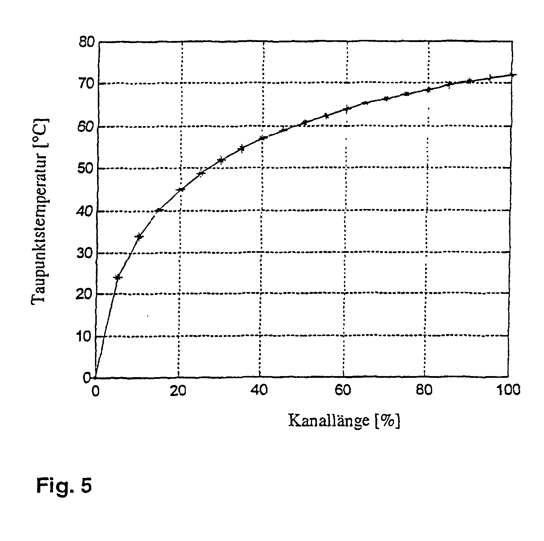

Fig. 5 zeigt einen beispielhaften Verlauf der Temperatur des Taupunktes entlang des Kathodengaskanals eines erfindungsgemäßen Brennstoffzellenstapels. Dargestellt ist die Temperatur über der prozentualen Länge des Kathodengaskanal vom Eintritt in den Brennstoffzellenstapel zum Austritt aus dem Brennstoffzellenstapel. Die Erhöhung der Taupunktstemperatur kommt, wie in der Beschreibungseinleitung erwähnt, durch das sich entlang des Kathodengaskanals bildende Produktwasser zustande.

Aus dem Vergleich von Fig. 4 und Fig. 5 wird deutlich, dass über die gesamte Kanallänge die Temperatur des Kühlmediums im Bereich der Taupunktstemperatur des Kathodengases verläuft. Dies kann mittels der erfindungsgemäßen Überdeckung von Kühlmedium- und Kathodengaseintrittsbereich erreicht werden. Beide Temperaturverläufe weisen einen annähernd logarithmischen Verlauf auf. So beträgt z.B. bei einer prozentualen Kanallänge von 60% die lokale Temperatur des Kühlmediums ca. 63°C und die lokale Taupunktstemperatur des Kathodengases ca. 64°C. Bei einer prozentualen Kanallänge von 20% beträgt die lokale Temperatur des Kühlmediums ca. 45°C und die lokale Taupunktstemperatur des Kathodengases ebenfalls ca. 45°C.

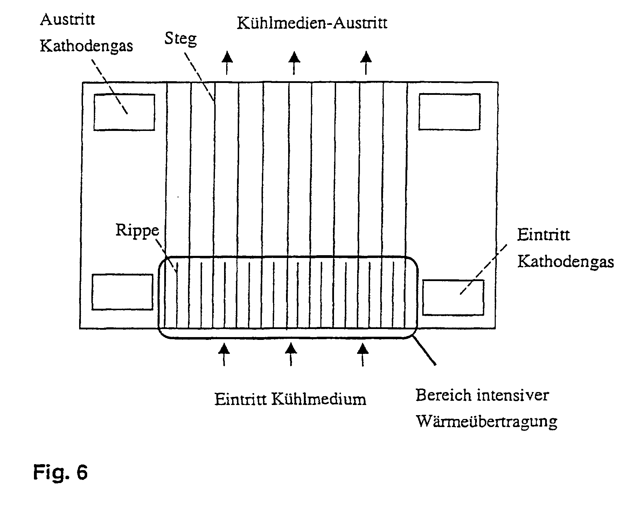

Fig. 6 zeigt eine weitere erfindungsgemäße Ausführung. Dargestellt ist eine Platte, auf deren dem Betrachter abgewandten Seite die in Fig. 1 oder 2 dargestellte Gasverteilerstruktur zur Führung des Kathodengases vorhanden sind. Auf der dem Betrachter zugewandten Seite ist die Verteilerstruktur für das Kühlmedium dargestellt. Man erkennt die einzelnen, parallelen Kanäle, die durch Stege voneinander getrennt sind. Das Kathodengas tritt über eine Durchbrechung in der Platte in die Zelle ein, durchläuft den oder die - hier nicht einsehbaren - Strömungskanäle und tritt an der diagonal gegenüberliegenden Durchbrechung wieder aus der Zelle aus. Das Kühlmedium tritt an der unteren Kante der Platte in die Kühlkanäle ein und verlässt diese an der gegenüberliegenden Kante. Der Bereich der Überdeckung von Kühlmediumseintrittsbereich und Kathodengaseintrittsbereich, in dem der Wärmeaustausch im wesentlichen stattfindet, ist umrandet. In diesem Bereich der Überdeckung sind innerhalb der Kanäle zusätzliche Rippen angeordnet, um die Kontaktfläche zu vergrößern. Dadurch wird in diesem Bereich der Wärmeaustausch zwischen Kühlmedium und Kathodengas erhöht.

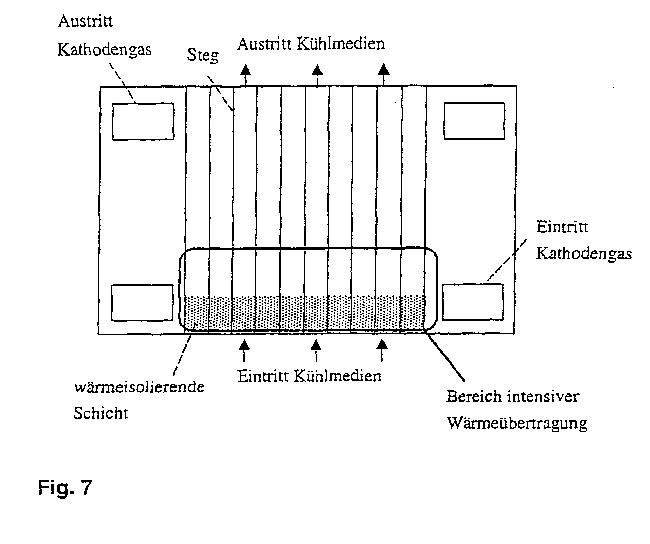

Fig. 7 zeigt eine Ausführung der Erfindung, mit der der lokale Wärmeaustausch über der Zellfläche durch zusätzliche Maßnahmen variiert wird. Der Aufbau der Platte entspricht mit Ausnahme der hier nicht vorhandenen Rippen im Bereich des Wärmeaustauschs dem in Fig. 6 gezeigten, so dass zur Vermeidung von Wiederholungen darauf verwiesen ist. Als zusätzliche Maßnahme ist innerhalb des Bereichs der Überdeckung von Kühlmediumseintrittsbereich und Kathodengaseintrittsbereich eine wärmeisolierende Schicht auf der Kanaloberfläche vorhanden. Durch entsprechende Auswahl von Schichtdicke und Schichtmaterial kann in diesem Bereich der Wärmeaustausch vergrößert werden, um somit die Ausbildung eines Temperaturgradienten zu optimieren. Diese Schicht kann z.B. eine selbst tragende Schicht oder Folie sein, die auf die Oberfläche aufgeklebt wird. Möglich ist aber auch das Aufbringen einer dünnen Lackschicht oder das unmittelbare Einbringen des zusätzlichen Materials in die Trägerschicht.

In einer weiteren Ausführung (nicht dargestellt) können bei der Vorrichtung nach Fig. 6 im Bereich der Überdeckung von Kühlmediumseintrittsbereich und Kathodengaseintrittsbereich gut wärmeleitfähige Materialien vorhanden sein, um den Wärmeaustausch zwischen Kathodengas und Kühlmedium in diesem Bereich weiter zu erhöhen.

In einer anderen Ausführung können bei der Vorrichtung nach Fig. 6 oder 7 im Bereich außerhalb der Überdeckung von Kühlmediumseintrittsbereich und Kathodengaseintrittsbereich wärmeisolierende Materialien eingesetzt werden.

Mit den beschriebenen Maßnahmen ist es somit möglich, die Temperatur des Kühlmediums optimal an die Taupunktstemperatur des Kathodengases anzupassen, so dass eine optimale Befeuchtung des Kathodengases gewährleistet ist, wodurch ein Austrocknen der MEA vermieden wird.

Alle in den Fig. 6 und 7 gezeigten Maßnahmen, die dort im Bezug auf die Kanäle zur Führung des Kühlmediums beschrieben wurden, können in gleicher Weise auch auf die Kanäle zur Führung des Kathodengases angewandt werden.

Aus Gründen der Übersichtlichkeit ist der Verlauf der Kanäle des Anodengases innerhalb des Brennstoffzellenstapels nicht eingezeichnet.

## Patentansprüche

1. Elektrochemischer Brennstoffzellenstapel mit
- mindestens einer Membran-Elektroden-Einheit (MEA) aus einer Anode, einer Kathode und einer dazwischen angeordneten Elektrolytmembran,
- mindestens einer anodenseitigen Gasverteilerstruktur mit einem Anodengaseintrittsbereich, einem Anodengasaustrittsbereich sowie Kanälen zur Führung des Anodengases vom Anodengaseintrittsbereich zum Anodengasaustrittsbereich, wobei das Anodengas Wasserstoff enthält sowie unoder teilbefeuchtet ist,
- mindestens einer kathodenseitigen Gasverteilerstruktur mit einem Kathodengaseintrittsbereich, einem Kathodengasaustrittsbereich sowie Kanälen zur Führung des Kathodengases vom Kathodengaseintrittsbereich zum Kathodengasaustrittsbereich, wobei das Kathodengas Sauerstoff enthält sowie un- oder teilbefeuchtet ist;
- einer Kühlmediumverteilerstruktur mit einem Kühlmediumseintrittsbereich, einem Kühlmediumsaustrittsbereich sowie Kanälen zur Führung des Kühlmediums vom Kühlmediumseintrittsbereich zum Kühlmediumsaustrittsbereich;
bei dem sich Kühlmediumeintrittsbereich und Kathodengaseintrittsbereich zumindest teilweise überdecken,
bei dem sich ferner Kühlmediumaustrittsbereich und Kathodengasaustrittsbereich zumindest teilweise überdecken, so dass sich entlang der Kanäle des Kühlmediums und des Kathodengases zwischen den Bereichen der Überdeckungen im Eintritts- und Austrittsbereich ein Temperaturgradient mit einer vom Eintrittsbereich zum Austrittsbereich ansteigenden Temperatur ausbilden kann,
**dadurch gekennzeichnet,**
**dass** im Bereich der Überdeckung der Eintrittsbereiche und/oder im Bereich der Überdeckung der Austrittsbereiche die Geometrie der Kanäle gegenüber den Bereichen außerhalb der Überdeckung unterschiedlich ist.

2. Elektrochemischer Brennstoffzellenstapel nach Anspruch 1, **dadurch gekennzeichnet, dass** die Geometrie der Kanäle sich im Bereich der Überdeckung der Eintrittsbereiche und/oder im Bereich der Überdeckung der Austrittsbereiche hinsichtlich Kanalanordnung, Kanalquerschnitt, Kanalzahl pro Fläche, zusätzlicher Rippen, Stege, Rillen oder Nadeln von den übrigen Bereichen außerhalb der Überdeckung unterscheidet.

3. Elektrochemischer Brennstoffzellenstapel nach Anspruch 1 oder 2, **dadurch gekennzeichnet, dass** im Bereich der Überdeckung der Eintrittsbereiche und im Bereich der Überdeckung der Austrittsbereiche im Wärmeübertragungsweg zwischen Kühlmedium und Kathodengas Materialien vorhanden sind, die sich hinsichtlich ihrer wärmeleitenden Eigenschaften von den außerhalb der Überdeckung eingesetzten Materialien unterscheiden.

4. Elektrochemischer Brennstoffzellenstapel nach einem der vorangehenden Ansprüche, **dadurch gekennzeichnet, dass** sich im Bereich der Überdeckung der Eintrittsbereiche zusätzlich der Ariodengaseintrittsbereich und im Bereich der Überdeckung der Austrittsbereiche zusätzlich der Anodengasaustrittsbereich befindet.

5. Verfahren zum Betrieb eines elektrochemischen Brennstoffzellenstäpels nach einem der vorangehenden Ansprüche, bei dem als Kühlmedium ein Gas eingesetzt wird, **dadurch gekennzeichnet, dass** entlang der Kanäle zwischen den Überdeckungen im Eintrittsbereich und den Überdeckungen im Austrittsbereich die lokale Temperatur des Kühlmediums im Bereich der Taupunktstemperatur des Kathodengases liegt.

6. Betriebsverfahren nach Anspruch 5, **dadurch gekennzeichnet, dass** das Kathodengas und das Kühlmedium im Gleichstrom geführt werden.

7. Betriebsverfahren nach Anspruch 5 oder 6, **dadurch gekennzeichnet, dass** das Anodengas im Gleichstrom zum Kathodengas und zum Kühlmedium geführt wird.

## Claims

1. An electrochemical fuel cell stack, having
- at least one membrane electrode assembly (MEA) comprising an anode, a cathode and an electrolyte membrane arranged between them,
- at least one anode-side gas distributor structure having an anode gas inlet region, an anode gas outlet region and passages for guiding the anode gas from the anode gas inlet region to the anode gas outlet region, the anode gas containing hydrogen and being unhumidified or partially humidified,
- at least one cathode-side gas distributor structure having a cathode gas inlet region, a cathode gas outlet region and passages for guiding the cathode gas from the cathode gas inlet region to the cathode gas outlet region, the cathode gas containing oxygen and being unhumidified or partially humidified;
- a cooling medium distributor structure having a cooling medium inlet region, a cooling medium outlet region and passages for guiding the cooling medium from the cooling medium inlet region to the cooling medium outlet region;
in which fuel cell stack cooling medium inlet region and cathode gas inlet region at least partially overlap,
in which fuel cell stack, furthermore, cooling medium outlet region and cathode gas outlet region at least partially overlap, so that a temperature gradient with a temperature which rises from the inlet region to the outlet region can form along the passages for the cooling medium and the cathode gas between the regions of the overlaps in the inlet and outlet regions,
**characterized in that** the geometry of the passages in the region of the overlap between the inlet regions and/or in the region of the overlap between the outlet regions differs from the geometry of the passages in the regions outside the overlap.

2. The electrochemical fuel cell stack as claimed in claim 1, **characterized in that** the geometry of the passages in the region of the overlap between the inlet regions and/or in the region of the overlap between the outlet regions differs from the remaining regions outside the overlap in terms of the passage arrangement, passage cross section, number of passages per unit area, additional ribs, webs, grooves or needles.

3. The electrochemical fuel cell stack as claimed in claim 1 or 2, **characterized in that** in the region of the overlap between the inlet regions and in the region of the overlap between the outlet regions, in the heat transfer path between cooling medium and cathode gas, there are materials which differ from the materials used outside the overlap in terms of their thermal conduction properties.

4. The electrochemical fuel cell stack as claimed in one of the preceding claims, **characterized in that** the anode gas inlet region is additionally located in the region of the overlap between the inlet regions and the anode gas outlet region is additionally located in the region of the overlap between the outlet regions.

5. A method for operating the electrochemical fuel cell stack as claimed in one of the preceding claims, in which the cooling medium used is a gas, **characterized in that** the local temperature of the cooling medium along the passages between the overlaps in the inlet region and the overlaps in the outlet region is in the region of the dew point temperature of the cathode gas.

6. The operating method as claimed in claim 5, **characterized in that** the cathode gas and the cooling medium are passed in cocurrent.

7. The operating method as claimed in claim 5 or 6, **characterized in that** the anode gas is passed in cocurrent with respect to the cathode gas and with respect to the cooling medium.

## Revendications

1. Empilement de cellules électrochimiques à combustible, avec
- au moins un assemblage membrane-électrodes (AME) constitué d'une anode, d'une cathode et d'une membrane d'électrolyte placée entre les électrodes,
- au moins une structure distributrice de gaz côté anode, avec une région d'entrée de gaz d'anode, une région de sortie de gaz d'anode ainsi que des canaux pour guider le gaz d'anode de la région d'entrée de gaz d'anode vers la région de sortie de gaz d'anode, le gaz d'anode contenant de l'hydrogène et étant non humidifié ou partiellement humidifié,
- au moins une structure distributrice de gaz côté cathode, avec une région d'entrée de gaz de cathode, une région de sortie de gaz de cathode ainsi que des canaux pour guider le gaz de cathode de la région d'entrée de gaz de cathode vers la région de sortie de gaz de cathode, le gaz de cathode contenant de l'oxygène et étant non humidifié ou partiellement humidifié ;
- une structure distributrice de réfrigérant, avec une région d'entrée de réfrigérant, une région de sortie de réfrigérant ainsi que des canaux pour guider le réfrigérant de la région d'entrée de réfrigérant vers la région de sortie de réfrigérant ;
selon lequel la région d'entrée de réfrigérant et la région d'entrée de gaz de cathode se recouvrent au moins partiellement,
selon lequel, en outre, la région de sortie de réfrigérant et la région de sortie de gaz de cathode se recouvrent au moins partiellement, de sorte qu'un gradient de température, avec une température ascendante de la région d'entrée vers la région de sortie, peut se former le long des canaux de réfrigérant et de gaz de cathode entre les régions des recouvrements dans la région d'entrée et dans la région de sortie,
**caractérisé en ce que** la géométrie des canaux est différente dans la région du recouvrement des régions d'entrée et/ou dans la région du recouvrement des régions de sortie, par rapport aux régions en dehors du recouvrement.

2. Empilement de cellules électrochimiques à combustible selon la revendication 1, **caractérisé en ce que** la géométrie des canaux dans la région du recouvrement des régions d'entrée et/ou dans la région du recouvrement des régions de sortie se différencie des autres régions en dehors du recouvrement en termes de disposition des canaux, de section des canaux, de nombre de canaux par unité de surface et de côtes, nervures, gorges ou aiguilles supplémentaires.

3. Empilement de cellules électrochimiques à combustible selon la revendication 1 ou 2, **caractérisé en ce que** sont présents, dans la région du recouvrement des régions d'entrée et dans la région du recouvrement des régions de sortie, dans le parcours de transmission de chaleur entre le réfrigérant et le gaz de cathode, des matériaux dont les propriétés de conduction de chaleur se différencient de celles des matériaux utilisés en dehors du recouvrement.

4. Empilement de cellules électrochimiques à combustible selon l'une quelconque des revendications précédentes, **caractérisé en ce que** la région d'entrée de gaz d'anode se trouve en outre dans la région du recouvrement des régions d'entrée et la région de sortie de gaz d'anode se trouve en outre dans la région du recouvrement des régions de sortie.

5. Procédé d'exploitation d'un empilement de cellules électrochimiques à combustible selon l'une quelconque des revendications précédentes, selon lequel on utilise un gaz comme réfrigérant, **caractérisé en ce que**, le long des canaux entre les recouvrements dans la région d'entrée et les recouvrements dans la région de sortie, la température locale du réfrigérant se situe dans la région de la température de point de rosée du gaz de cathode.

6. Procédé d'exploitation selon la revendication 5, **caractérisé en ce que** le gaz de cathode et le réfrigérant sont dirigés en courants parallèles.

7. Procédé d'exploitation selon la revendication 5 ou 6, **caractérisé en ce que** le gaz d'anode est dirigé en courant parallèle par rapport au gaz de cathode et par rapport au réfrigérant.
